# EUROPÄISCHE PATENTSCHRIFT

(11) **EP 2 788 234 B1**
(45) Veröffentlichungstag und Bekanntmachung des Hinweises auf die Patenterteilung: **22.05.2019**
(21) Anmeldenummer: 12746368.5
(22) Anmeldetag: 16.08.2012
(51) Int. Cl.: B60T 8/88, B60T 13/74

(54) **VERFAHREN SOWIE ELEKTRONISCHE EINRICHTUNG ZUR VERBESSERUNG DER VERFÜGBARKEIT EINES ELEKTROMECHANISCHEN AKTUATORS**
METHOD AND ELECTRONIC DEVICE FOR IMPROVING THE AVAILABILITY OF AN ELECTROMECHANICAL ACTUATOR
PROCÉDÉ ET SYSTÈME ÉLECTRONIQUE POUR AMÉLIORER LA DISPONIBILITÉ D'UN ACTIONNEUR ÉLECTROMÉCANIQUE

(30) Priorität: 07.12.2011 DE 102011087907
(43) Veröffentlichungstag der Anmeldung: 15.10.2014
(73) Patentinhaber: Continental Teves AG & Co. OHG, 60488 Frankfurt am Main (DE)
(72) Erfinder: KAUFMANN, Tom, 55566 Ippenschied (DE); STAUDER, Peter, 55128 Mainz (DE); BÖHM, Jürgen, 65558 Oberneisen (DE)
(86) Internationale Anmeldenummer: PCT/EP2012/065988
(87) Internationale Veröffentlichungsnummer: WO 2013/083301

(56) Entgegenhaltungen:
- EP-A2- 1 026 060
- WO-A1-2005/061304
- WO-A1-2007/090718
- DE-A1- 19 634 567
- DE-A1-102005 036 827
- DE-A1-102009 046 234

## Beschreibung

Die vorliegende Erfindung betrifft ein Verfahren zur Verbesserung der Verfügbarkeit eines elektromechanischen Aktuators einer elektromechanischen Bremsanlage (EMB) in einem Kraftfahrzeug gemäß Oberbegriff von Anspruch 1 sowie eine elektronische Einrichtung gemäß Oberbegriff von Anspruch 10.

In der Kraftfahrzeugtechnik finden "Brake-by-wire"-Brems-anlagen eine immer größere Verbreitung. Solche Bremsanlagen umfassen oftmals elektromechanischen Aktuatoren, die jeweils einem Rad zugeordnet sind und durch elektronische Signale angesteuert werden, welche durch einen Bremswunsch des Fahrzeugführers oder zum Beispiel durch ein elektronisches Stabilitätsprogramm ausgelöst werden können. Die Bremswirkung wird insbesondere mittels einer Reibungsbremse erzielt. Ein Aktuator umfasst in elektromechanischen Bremsanlagen mindestens einen Elektromotor, ein Getriebe und eine Reibungsbremse, wobei die gewünschte Zuspannkraft auf die Bremsscheiben durch den Elektromotor aufgebracht wird. Im Falle von elektrohydraulischen Bremssystemen kann der notwendige Hydraulikdruck beispielsweise durch einen Zentralaktuator zur Verfügung gestellt werden.

In der DE 102 007 021 286 A1 wird ein elektromechanisches Bremssystem mit einer ausfallsicheren Energieversorgung und ein Verfahren zur ausfallsicheren Energieversorgung in einem elektromechanischen Bremssystem für Fahrzeuge offenbart. Die Bremsanlage umfasst bis zu vier jeweils einem Rad zugeordnete Bremsmodule, wobei jedes ein Steuergerät und einen Aktuator umfasst, welche mit einer Hauptenergieversorgungseinheit über separate Leitungen mit Energie versorgt werden. Weiterhin wird das Vorhandensein einer ersten und zweiten Not-Energieversorgungseinheit mit Versorgung für jeweils zwei der Bremsmodule mit getrennt voneinander geführten Leitungen offenbart. In der Anmeldung werden keine Ausführungen dazu gemacht, wie die Funktionsfähigkeit der Bremsanlage bei Störungen innerhalb der Regelung des Elektromotors des Aktuators aufrechterhalten werden kann.

Bei dem in der EP 1 026 060 A2 beschriebenen elektrischen Bremssystem erfolgt, bei einer Überschreitung einer Motortemperatur elektromotorisch betriebener Radbremsen eines Fahrzeugs, ein Trennen des entsprechenden Elektromotors von der Energieversorgung. Die Motoren der weiteren Radbremsen bleiben dabei in Betrieb.

Die WO 2007/090718 A1 beschreibt ein Verfahren zum Betreiben einer Synchronmaschine, bei dem Schätzwerte von Motorströmen der Synchronmaschine in einem mit dem Rotor umlaufenden Koordinatensystem mittels eines Beobachters ermittelt werden. Dies geschieht abhängig von Sollwerten elektrischer Spannungen der Synchronmaschine in den mit dem rotorumlaufenden Koordinatensystem. Nach einem erkannten Ausfall der Stromsensorik wird die Synchronmaschine in einem Betriebszustand des Notlaufs betrieben und zwar unabhängig von den Messwerten der Motorströme in dem mit dem Rotor umlaufenden Koordinatensystem und dafür abhängig von Schätzwerten der Motorströme.

In der WO 2005/061304 A1 ist ein Verfahren zum Abbremsen oder Anhalten eines mit Gleichstrom betriebenen Elektromotors beschrieben, wobei das Verfahren für den Fall eines Fehlers vorgesehen ist. Dafür wird die Ansteuerung an einen Fehlerzustand angepasst. Es wird beispielsweise überprüft, ob ein Ansteuerstrom oder eine aktuelle Drehzahl ermittelbar oder nicht ermittelbar ist. Ist dieser Parameter nicht ermittelbar, wird zumindest zeitweise in zumindest einer Motorphase ein Kurzschluss zeitgesteuert erzeugt.

Die Aufgabe der Erfindung besteht nun darin, ein Verfahren zur Verbesserung der Verfügbarkeit eines elektromechanischen Aktuators sowie eine entsprechende elektronische Einrichtung bereitzustellen, welche zuverlässiger arbeiten, d.h., welche insbesondere bei einer auftretenden Störung oder einem Ausfall der Erfassung einzelner oder mehrerer Zustandsgrößen der Regelung des Elektromotors eines Aktuators einer elektromechanischen oder elektrohydraulischen Bremsanlage den Betrieb der Motorregelung und damit des Aktuators aufrecht erhält.

Diese Aufgabe wird erfindungsgemäß durch das Verfahren gemäß Anspruch 1 und die elektronische Einrichtung gemäß Anspruch 10 gelöst.

Das erfindungsgemäße Verfahren zur Verbesserung der Verfügbarkeit eines elektromechanischen Aktuators einer elektromechanischen oder elektrohydraulischen Bremsanlage in einem Kraftfahrzeug umfassend eine in einem nicht eingeschränkten Betriebsmodus (Normalbetrieb) arbeitende elektronische Motorregelung für einen feldkommutierten, mit Pulsweitenmodulation angesteuerten Elektromotor, zeichnet sich dadurch aus, dass zusätzlich zum nicht eingeschränkten Betriebsmodus weitere Betriebsmodi für die Motorregelung definiert sind, welche mit eingeschränktem Zugriff auf Zustandsgrößen des Elektromotors und dessen Ansteuerelektronik arbeiten, wobei in diesen eine Änderung des Regelungsablaufs und/oder eine Abschaltung einzelner Funktionen der Motorregelung in Abhängigkeit des eingeschränkten Zugriffs oder der eingeschränkten Zugriffe durchgeführt wird.

Mit der Definition der Betriebsmodi ist es möglich, die Regelung des Elektromotors in Fällen von eingeschränktem Zugriff auf die Zustandsgrößen aufrechtzuerhalten und bei Störungsfällen dieser Art einen Komplettausfall des Elektromotors oder die Umschaltung in eine mechanische Rückfallebene des Aktuators zu vermeiden.

Die Festlegung auf den jeweiligen Betriebsmodus ist erfindungsgemäß abhängig vom Zugriff auf Messergebnisse der Ströme in den Phasen des Elektromotors, wobei zumindest unterschieden wird zwischen einer oder mehreren der Klassen "Strommessung funktionsfähig", "Strommessung in einer Phase ausgefallen" und "Strommessung vollständig ausgefallen".

Diese vorwiegende Abhängigkeit von den Messergebnissen der Ströme ergibt sich aus der Definition der Leistungs-Degradationsstufen (Rückfallebenen) des elektromechanischen Aktuators.

Bei eingeschränktem Zugriff auf Messergebnisse eines Stroms in einer Phase des Elektromotors erfolgt erfindungsgemäß eine Rekonstruktion dieses Wertes unter Verwendung der gemessenen Stromwerte der anderen Phasen. Dieser Zusammenhang kann dann jedoch nicht mehr zur Überwachung von Fehlerströmen ausgewertet werden, da aufgrund der Berechnung des fehlenden Stromwertes keine Fehlerstromerkennung auf gleicher Basis durchgeführt werden kann.

Gemäß einer Weiterbildung des erfindungsgemäßen Verfahrens sind die Betriebsmodi der Motorregelung, entsprechend definierten Leistungs-Degradationsstufen (Rückfallebenen) des elektromechanischen Aktuators, hierarchisch geordnet. Diese orientieren sich bevorzugt und zweckmäßigerweise an der Sicherheit der Fahrzeuginsassen. Die Funktionalität der elektromechanischen oder elektrohydraulischen Bremsanlage bleibt damit, bei möglicher verringerter Ausgangsleistung des Aktuators, erhalten. Die Notwendigkeit des Einsatzes einer mechanischen Rückfallebene wird damit merklich vermindert und die Sicherheit der Fahrzeuginsassen bei Störungsfällen, im Vergleich zum Stand der Technik, deutlich gesteigert.

Gemäß einer weiteren bevorzugten Ausführungsform des erfindungsgemäßen Verfahrens erfolgt eine Ansteuerung und Regelung des Elektromotors derart, dass eine weitgehend gleichbleibend hohe Ausgangsleistung über einen möglichst großen Drehzahlbereich eines Rotors des Elektromotors (Constant-Power-Betrieb) erzielt wird. Damit wird einerseits eine konstante Bremswirkung erzielt, andererseits wird eine maximal zulässige elektrische Leistung über diesen Drehzahlbereich aufgenommen. Das ist insbesondere für die Aktuatoren eines EMB vorteilhaft, da diese in manchen Situationen aufgrund eines hohen Strombedarfs ein Bordstromnetz des Kraftfahrzeugs stark belasten können.

Gemäß einer weiteren bevorzugten Ausführungsform des erfindungsgemäßen Verfahrens kann ein Abschalten von Bordnetz-Schutzmaßnahmen und/oder einer Temperaturüberwachung und/ oder einer Totzeitkompensation in Abhängigkeit des jeweiligen Betriebsmodus durchgeführt werden. Besonders bevorzugt erfolgt dies, wenn für den Normalbetrieb benötigte Zustandsgrößen nicht mehr verfügbar sind. Insbesondere die aufgrund des eingeschränkten Zugriffs gestörte oder ausbleibende Zustandsgröße kann somit identifiziert werden und der Betriebsmodus gewählt, welcher ohne diese Zustandsgröße die Funktionalität der Regelung des Elektromotors aufrechterhält, wobei die Festlegung auf den jeweiligen Betriebsmodus bevorzugt abhängig vom eingeschränkten oder uneingeschränkten Zugriff auf Temperaturen und/oder Zwischenkreisspannung und/oder Schaltzeiten der Pulsweitenmodulation des Elektromotors und dessen Ansteuerelektronik ist.

Eine Reduzierung eines Aussteuergrades der Pulsweitenmodulation zur Ansteuerung des Elektromotors wird vorzugsweise dann vorgenommen, wenn die Strommessung an jeweils einem Transistor der Phase der Ansteuerelektronik erfolgt. Das hat den Vorteil, dass zu jedem Zeitpunkt beide verbleibenden Strommesseinrichtungen einen Messwert liefern können, damit eine Rekonstruktion des fehlenden Stromwertes durchgeführt werden kann.

Bevorzugt erfolgt bei vollständiger Einschränkung des Zugriffs auf die Messergebnisse aller Ströme in den Phasen des Elektromotors eine modellbasierte Bestimmung von Iststromwerten. Damit kann vorteilhafterweise die feldorientierte Regelung des Elektromotors aufrechterhalten werden. Ein Verfahren zur modellbasierten Bestimmung dieser Größen ist beispielsweise in WO2007/090718 A1 beschrieben.

Gemäß einer Weiterbildung des erfindungsgemäßen Verfahrens wird bei eingeschränktem Zugriff auf die Strommessung an einem Transistor der Phase der Ansteuerelektronik die Bestimmung der Iststromwerte modellbasiert durchgeführt, insbesondere wenn eine Reduzierung des Aussteuergrades der Pulsweiten-modulation des Elektromotors nicht ausgeführt werden kann. Dies erfolgt beispielsweise wenn eine Fahrsituation vorliegt, in der eine sich daraus ergebende Reduzierung der Ausgangsleistung des Elektromotors die Sicherheit der Fahrzeuginsassen gefährden würde.

Bevorzugt wird in den Betriebsarten einer nicht mechanischen Rückfallebene des Aktuators, in denen, neben dem Zugriff auf Messergebnisse der Ströme in den Phasen des Elektromotors, der Zugriff auf mindestens eine weitere Zustandsgröße eingeschränkt ist, die Motorregelung von einem stromgeregelten Betriebsmodus in einen spannungskommutierte Betriebsmodus umgeschaltet.

Gemäß einer bevorzugten Ausführungsform wird ein dem Stromregler überlagerter Drehzahlregler im spannungskommutierten Betriebszustand so adaptiert, dass Motor-Sollspannungen erzeugt werden, womit eine gesteuerte Funktionalität des Elektromotors erhalten bleibt. Erfolgt eine modellbasierte Bestimmung der Istströme oder wird ein spannungskommutierter Betriebsmodus ausgeführt, werden dazu bevorzugt Module, welche Motormomentinformationen auswerten, deaktiviert, auf die Verwendung eines Ersatzsignals adaptiert und/oder in einen Modus umgeschaltet, welcher auf ein größeres fehlerbehaftetes Motormoment angepasst ist.

Die erfindungsgemäße elektronische Einrichtung, insbesondere zur Verbesserung der Verfügbarkeit eines elektromechanischen Aktuators einer elektromechanischen oder elektrohydraulischen Bremsanlage in einem Kraftfahrzeug, umfassend eine Sollwertschnittstelle zur Vorgabe von Sollgrößen und Parametern, ein Modul zur Berechnung von Pulsweitenmodulations-Schaltzeiten, ein Modul zur Totzeitkompensation, ein Modul Leistungselektronik zur Ansteuerung eines dreiphasig angesteuerten Elektromotors, ein Modul zur Messung der Puls-weitenmodulations-Schaltzeiten, ein Modul zur Stromerfassung, ein Modul zur Spannungsmessung, ein Modul zur Temperaturerfassung, ein Modul zur Temperaturüberwachung, einen feldorientierten Stromregler sowie elektrische Verbindungsleitungen zwischen den Bestandteilen zeichnet sich dadurch aus, dass ein Modul zur Sollstromermittlung vorhanden ist, welches mit dem feldorientierten Stromregler elektrisch verbunden ist und über diese Verbindung vom Modul zur Sollstromermittlung, unter Verwendung verschiedener Zustands- und/oder Schätzgrößen sowie gespeicherter Parameter, berechnete Sollstromwerte erhält.

Der Vorteil ist, dass es damit möglich ist die Regelung des Elektromotors in Fällen von eingeschränktem Zugriff auf die Zustandsgrößen des Elektromotors und dessen Ansteuerelektronik aufrechtzuerhalten und bei Störungsfällen dieser Art einen Komplettausfall des Elektromotors oder die Umschaltung in eine mechanische Rückfallebene des Aktuators zu vermeiden.

Gemäß einer bevorzugten Ausführungsform der erfindungsgemäßen elektronischen Einrichtung umfasst diese einen Algorithmus, der derart ausgelegt ist, dass die elektronische Einrichtung das erfindungsgemäße Verfahren zur Verbesserung der Verfügbarkeit eines elektromechanischen Aktuators abarbeiten kann.

Für die Aufbringung der Zuspannkraft durch den Aktuator kommt der dreiphasig angesteuerte Elektromotor zum Einsatz, welcher gemäß einer bevorzugten Ausführungsform der elektronischen Einrichtung ein permanentmagnetisch erregter Synchronmotor ist, welcher insbesondere bürstenlos ausgeführt ist. Der Vorteil ist, dass diese Motorenart beispielsweise aufgrund der Wartungsfreiheit und hohen Regeldynamik besonders geeignet für die Anwendung im Kraftfahrzeug ist, wobei zur Ansteuerung des Synchronmotors bevorzugt ein feldorientierter Stromregler verwendet wird, mit dem der Synchronmotor oberhalb einer natürlichen Spannungsgrenze betrieben werden kann (Feldschwächung).

Vorzugsweise ist ein Modul Bordnetz-Maßnahmen vorhanden, welches mit dem Modul zur Sollstromermittlung elektrisch verbunden ist und über diese Verbindung die Maximalwerte zur Begrenzung des aufgenommenen und/oder abgegebenen Bordnetzstroms übertragen werden. Beispielsweise kann damit eine Beschränkung der Leistungsaufnahme des Aktuators durchgeführt werden, um das Bordnetz des Kraftfahrzeugs zu schützen.

Gemäß einer Weiterbildung der erfindungsgemäßen elektronischen Einrichtung ist das Modul zur Temperaturüberwachung mit dem Modul zur Sollstromermittlung verbunden und über diese Verbindung werden die Maximalwerte zur Begrenzung des motorseitigen Stromes übertragen. Der Vorteil ist, dass Schädigungen am Elektromotor und der Leistungselektronik aufgrund zu hoher Temperaturen infolge zu hoher Ströme durch geregelte Anpassung der Motorströme verhindern werden können.

Gemäß einer bevorzugten Ausführungsform ist das Modul zur Spannungsmessung mit dem Modul Bordnetz-Maßnahmen verbunden und über diese Verbindung werden gemessene Spannungswerte, insbesondere der Zwischenkreisspannung, übertragen. Vorteilhafterweise können diese bei der Bestimmung der Begrenzung des aufgenommenen und/oder abgegebenen Bordnetzstroms im Modul Bordnetz-Maßnahmen berücksichtigt werden.

Gemäß einer bevorzugten Ausführungsform der erfindungsgemäßen elektronischen Einrichtung ist die Sollwert-Schnittstelle mit dem Modul zur Sollstromermittlung elektrisch verbunden und über diese Verbindung werden Sollgrößen und/oder Parameter übertragen. Dadurch können beispielsweise im laufenden Betrieb der Regelung Eingaben/Ausgaben durch/an die ECU erfolgen, um die Motorregelung an übergeordnete Reglerstrukturen anzupassen.

Das Modul zur Temperaturüberwachung ist gemäß einer bevorzugten Ausführungsform mit dem Modul zur Temperaturerfassung verbunden und über diese Verbindung werden Temperaturwerte übertragen, deren Bildung sich auf Messwerte, Modellberechnungen und/oder einer Mischung dieser stützt. Die Kenntnis der weitestgehend angenäherten thermischen Verhältnisse im Synchronmotor wird durch die Motorregelung beispielsweise dahingehend berücksichtigt, dass eine Beschädigung und eventueller Ausfall durch zu hohe Temperatur verhindert und andererseits der Elektromotor an der thermischen Leistungsgrenze betrieben werden kann.

Gemäß einer bevorzugten Ausführungsform der elektronischen Einrichtung ist ein Modul zur Totzeitkompensation mit einem Modul zur Messung von Pulsweitenmodulations-Schaltzeiten an der Leistungselektronik (Endstufe) des Synchronmotors verbunden, welches, über diese Verbindung die gemessenen Werte der Pulsweitenmodulations-Schaltzeiten erhält. Dadurch können beispielsweise die durch die Tot- und Schaltzeiten der Leistungselektronik hervorgerufenen Störungen der Ausgangsspannung der Leistungselektronik kompensiert werden.

Gemäß einer Weiterbildung der elektronischen Einrichtung sind Module zur Temperaturerfassung, Spannungsmessung und/oder Stromerfassung mit der Leistungselektronik und/oder dem Elektromotor elektrisch oder bezüglich der Temperaturerfassung verbunden, um diese Zustandsgrößen des Synchronmotors zu erfassen und der Motorregelung zuzuführen.

Bevorzugt ist das Modul zur Temperaturerfassung mit dem Modul zur Sollstromermittlung elektrisch verbunden und über diese Verbindung werden die aktuellen Temperaturwerte der Leistungselektronik und/oder des Synchronmotors übertragen. Im Falle von Einschränkung des Zugriffs auf die Temperaturwerte kann vorteilhafterweise die Regelung in einem vom Normalbetrieb abweichenden Betriebsmodus ausgeführt werden.

Weitere bevorzugte Ausführungsformen ergeben sich aus den Unteransprüchen und der nachfolgenden Beschreibung eines Ausführungsbeispiels an Hand von Figuren.

Es zeigen:
- Fig. 1: ein schematisches Blockschaltbild der erfindungsgemäßen elektronischen Einrichtung, und
- Fig. 2: eine tabellarische Übersicht über mögliche Betriebsmodi der Motorregelung.

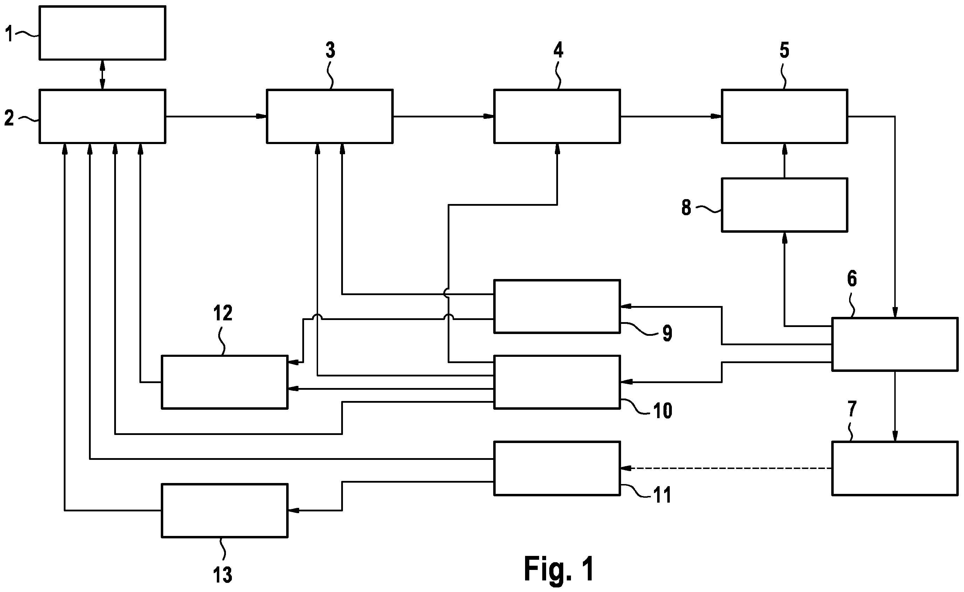

Fig. 1 zeigt den Signalfluss der zu betrachtenden Größen in einem, für die Beschreibung der elektronischen Einrichtung und des Verfahrens, auf die notwendigsten Größen reduzierten Blockschaltbild einer Motorregelung eines feldkommutierten, permanentmagnetisch erregten Synchronmotors (PMSM) eines Aktuators eines elektromechanisch angetriebenen Fremdkraftbremssystems (CFB). Diese Motorenart ist für den Einsatz im Kraftfahrzeug besonders geeignet, da beispielweise durch den Verzicht auf Kommutatoren die Wartungsintensität im Vergleich zu Synchronmotoren mit Kommutatoren verringert wird. Die Drehzahl des Rotors des PMSM und die Motorlage werden als gesichert angenommen und deshalb nicht dargestellt.

Im Normalbetrieb werden ein Sollstromwert idsoll und ein Sollstromwert iqsoll in Abhängigkeit eines Moduls zur Sollstromermittlung 2, aus den über eine Sollwertschnittstelle 1 eingehenden Sollwerten und weiteren Mess- und Schätzgrößen sowie gespeicherten Parametern gebildet. In diesem Erläuterungsbeispiel gehen Temperatur, Maximalwert für den motorseitigen Strom, eine Zwischenkreisspannung und Maximalwerte zur Begrenzung des aufgenommenen/abgegebenen Bordnetzstromes in die Berechnung der Sollstromwerte idsoll und iqsoll ein. Auf deren Ermittlung wird weiter unten im Detail eingegangen.

Die Sollstromwerte idsoll und iqsoll werden einem feldorientiert arbeitenden Stromregler 3 (FOC-Stromregler) zugeführt, welcher unter Verwendung von Iststromwerten id und iq und der Zwischenkreisspannung Uzk, Sollspannungswerte berechnet und diese an das Modul zur Berechnung der Pulsweitenmodu-lations(PWM)-Schaltzeiten 4 weitergibt. Diese werden anschließend einem Modul zur Totzeitkompensation 5 zugeführt und derart manipuliert, dass Verzerrungen einer Ausgangsspannung, welche durch Tot- und Schaltzeiten einer Leistungselektronik 6 zur Ansteuerung des Elektromotors 7 hervorgerufen werden können, kompensiert werden. Dazu kann die an der Leistungselektronik 6, mit Hilfe eines Moduls zur Messung der PWM-Schaltzeiten 8, gemessene, tatsächliche PWM-Schaltzeit tPWMist, im Modul zur Totzeitkompensation 5 berücksichtigt werden.

An der Leistungselektronik 6 erfolgt eine Erfassung der Phasenströme, woraus durch ein Modul zur Stromerfassung 9 die Iststromwerte id und iq bestimmt werden, und eine Spannungsmessung 10, insbesondere zur Erfassung der Zwischenkreisspannung Uzk. Die Istströme werden von der Stromerfassung 9 auf Basis von Messwerten gebildet und dem Stromregler 3 sowie einem Modul Bordnetz-Maßnahmen 12 zugeführt. Der Wert der Zwischenkreisspannung Uzk wird dem Modul zur Sollstromermittlung 2, dem Stromregler 3, dem Modul zur Berechnung der Pulsweitenmodulations(PWM)-Schaltzeiten 4 und dem Modul Bordnetz-Maßnahmen 12 zur Verfügung gestellt. Im Modul Bordnetz-Maßnahmen 12 werden die Maximalwerte zur Begrenzung des aufgenommenen und/oder abgegebenen, bordnetzseitigen Stromes ermittelt und an das Modul zur Sollstromermittlung 2 übergeben.

Mindestens ein Temperatursignal T wird von einer Temperaturerfassung 11 am Elektromotor 7 gebildet und dem Modul zur Sollstromermittlung 2 zugeführt. Mit Hilfe des Temperatursignals T oder der Temperatursignale wird außerdem von einer Temperaturüberwachung 13 der Maximalwert für den motorseitigen Strom ermittelt, welcher ebenfalls dem Modul zur Sollstromermittlung 2 mitgeteilt wird. Die Ermittlung des Maximalwerts für den motorseitigen Strom durch die Temperaturüberwachung 13 kann sich dabei auf Messwerte, Modellberechnungen oder einer Mischung aus beidem stützen.

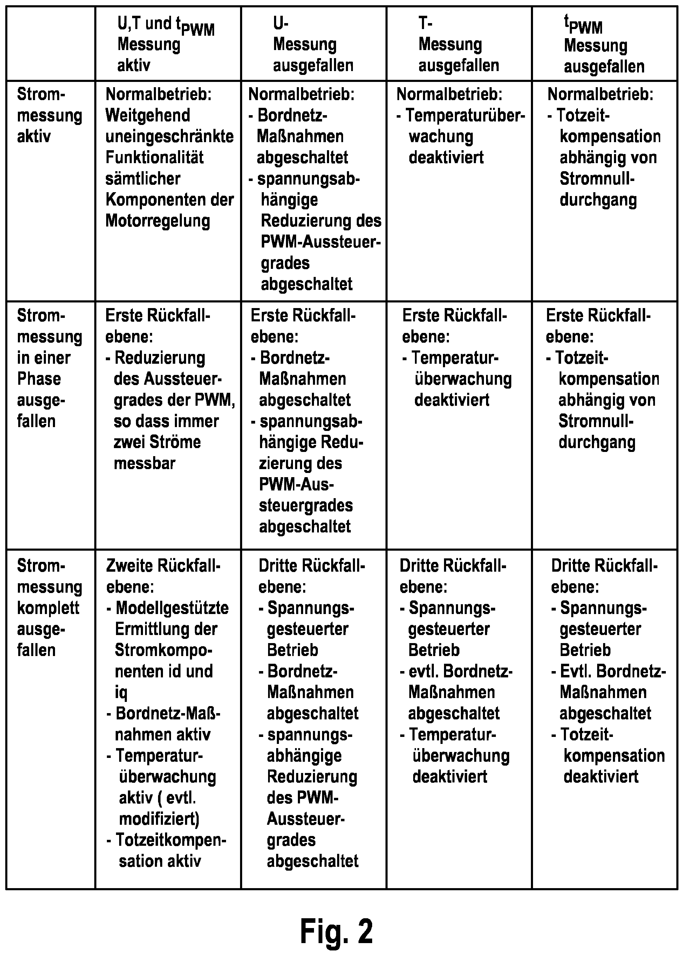

Fig. 2 zeigt eine tabellarische Übersicht über mögliche Betriebsmodi der Motorregelung und die daraus resultierenden Leitungs-Degradationsstufen des elektromechanischen Aktuators, wobei sich diese an der Verfügbarkeit der Phasenstrommessung orientieren. Für die erste Rückfallebene, im Falle des eingeschränkten Zugriffs auf ein Stromsignal, wird von einer dreiphasigen Strommessung ausgegangen.

Da für eine umfassende Motorregelung und zur Bestimmung von Ersatzsignalen weitere Zustandsgrößen benötigt werden, wird in den Spalten 3 bis 5 der tabellarischen Übersicht in Fig. 2 auf die Auswirkungen auf die Motorregelung beim eingeschränkten Zugriff auf diese Messsignale eingegangen (Temperatur, Zwischenkreisspannung und gemessene PWM-Schaltzeiten in den Motorphasen). Die Verfügbarkeit einer Rotorlageinformation wird für das Ausführungsbeispiel vorausgesetzt.

Die Module Bordnetz-Maßnahmen 12, Temperaturüberwachung 13 und Totzeitkompensation 5 können unabhängig voneinander deaktiviert werden, wenn jeweils benötigte Eingangssignale nicht mehr verfügbar sind.

Fällt bei drei gemessenen Phasenströmen eins der Strom-Messsignale aus, kann gemäß der Tabelle in Fig. 2, Zeile 3, Spalte 2 in einen vom Normalbetrieb abweichenden Betriebsmodus geschaltet werden, welcher sich in einer ersten Rückfallebene der Leistungs-Degradationsstufen befindet. Der fehlende Stromwert kann dann unter der Annahme, dass die Summe der Ströme gleich Null ist, durch Berechnung rekonstruiert werden. Dieser Zusammenhang kann dann jedoch nicht mehr zur Überwachung von Fehlerströmen ausgewertet werden.

Erfolgt die Messung der Ströme nicht direkt in der Phase sondern an jeweils einem Transistor der Phase (z.B. Low-Side-Shunt), so muss der Aussteuergrad der PWM so gewählt werden, dass zu jedem Zeitpunkt beide verbleibenden Strommesseinrichtungen einen Messwert liefern können. In diesem Fall ist eine Spannungsausnutzung von 100% nicht mehr möglich, wodurch sich die abgegebene Leistung des Motors verringert. Ist die daraus folgende Reduzierung der Aktuatorleistung aufgrund der zu gewährleistenden Sicherheit der Fahrzeuginsassen in einer aktuellen Fahrsituation nicht möglich, wird ein modellbasiertes Verfahren zur Bestimmung der Ströme verwendet und die Ansteuerung des Motors mit maximaler Aussteuerung fortgesetzt.

Bestehen Einschränkungen der Zugriffe auf sämtliche Strommessungen, wird in einen weiteren Betriebsmodus geschaltet, wobei in eine zweite Rückfallebene der Leistungs-Degrada-tionsstufen der Aktuatorregelung gewechselt wird (Fig. 2, Z. 4, Sp. 2). Die Iststromwerte id und iq werden mit Hilfe eines modellbasierten Verfahrens im Modul zur Stromerfassung 9 durch Berechnung ermittelt und dem Stromregler 3 zugeführt. Nachteilig auf das Systemverhalten kann es sich auswirken, dass die Fehler bei der modellbasierten Schätzung der Ströme auch zu einem, im Vergleich zum Normalbetrieb, größeren Fehler bei der Ermittlung des abgegebenen Motormomentes führen. Aus diesem Grund müssen Module, welche Motormomentinformationen auswerten, unter Umständen in einen Modus umschalten, der auf ein mit größerem fehlerbehafteten Motormoment angepasst ist. Dies kann zum Beispiel für Momentenaufschaltungen oder Fehlererkennungsmodule von Bedeutung sein.

Das eingesetzte Verfahren zur modellbasierten Berechnung der Ströme id und iq erfordert die Berücksichtigung weiterer Zustandsgrößen. Zumindest müssen die Zwischenkreisspannung Uzk und die Temperaturen des Elektromotors und Leistungselektronik bekannt sein. Weiterhin muss gewährleistet sein, dass die Totzeitkompensation aktiv ist und Abweichungen einer Ausgangsspannung der Leistungselektronik von den vorgegebenen Sollwerten verhindert werden.

Bestehen zusätzlich zur Strommessung Einschränkungen beim Zugriff auf eine weitere Zustandsgröße, wird in einen Betriebsmodus einer dritten Rückfallebene umgeschaltet (Fig. 2, Z. 4, Sp. 3-5). In dieser Betriebsart wird der Elektromotor nur noch spannungskommutiert, d.h. der Stromregler wird deaktiviert und abhängig von der gemessenen Rotorlage wird eine Motor-Sollspannung ermittelt und ausgegeben.

Zur Ermittlung der Motor-Sollspannung können zusätzlich zum gemessenen Rotorlagewinkel, sofern uneingeschränkter Zugriff besteht, auch die Drehzahl des Rotors und die Motortemperatur, herangezogen werden. Ein dem Stromregler überlagerter Drehzahlregler wird in diesem Betriebszustand so adaptiert, dass Motor-Sollspannungen erzeugt werden. Alle weiteren Module, welche die Information über das abgegebene Motormoment verarbeiten, werden deaktiviert oder auf die Verwendung eines Ersatzsignals umgestellt. Ein Ersatzsignal für das abgegebene Motormoment kann in einem Modul gebildet werden, welches vorhandene Zustandsgrößen auswertet. Auf Basis der so gewonnenen Momentinformationen ist es möglich rudimentäre Maßnahmen zum Schutz des Bordnetzes zu implementieren. Da diese aber unter Umständen die Verfügbarkeit des Systems weiter verringern könnten, sollte darauf verzichtet werden bzw. ist bei der Systemauslegung zu prüfen, inwiefern diese Maßnahmen anwendbar sind.

Die weiteren Zellen in der tabellarischen Übersicht von Fig. 2 beschreiben die Maßnahmen innerhalb der jeweiligen Betriebsmodi der Rückfallebenen der Leistungs-Degradationsstufen, abhängig von der Verfügbarkeit der Zustandsgrößen (Temperaturen, Zwischenkreisspannung und gemessene Pulsweiten-modulations-Schaltzeiten in den Motorphasen).

Ein Vorteil der Erfindung ist die auf die Erhaltung der Sicherheit der Fahrzeuginsassen ausgerichtete Verbesserung der Verfügbarkeit eines elektromechanischen Aktuator einer elektromechanischen oder elektrohydraulischen Bremsanlage bei Einschränkungen der Zugriffe auf Zustandsgrößen eines zur Erzeugung der Zuspannkraft einer Reibungsbremse verwendeten Elektromotors.

## Patentansprüche

1. Verfahren zur Verbesserung der Verfügbarkeit eines elektromechanischen Aktuators einer elektromechanischen oder elektrohydraulischen Bremsanlage in einem Kraftfahrzeug, umfassend eine in einem Normalbetrieb, d.h. nicht eingeschränkten Betriebsmodus arbeitende elektronische Motorregelung für einen feldkommutierten, mit Pulsweitenmodulation angesteuerten Elektromotor, wobei zusätzlich zum nicht eingeschränkten Betriebsmodus weitere Betriebsmodi für die Motorregelung definiert sind, welche mit eingeschränktem Zugriff auf Zustandsgrößen des Elektromotors und dessen Ansteuerelektronik arbeiten, wobei in diesen eine Änderung des Regelungsablaufs und/oder eine Abschaltung einzelner Funktionen der Motorregelung in Abhängigkeit des eingeschränkten Zugriffs oder der eingeschränkten Zugriffe durchgeführt wird, **dadurch gekennzeichnet, dass** die Festlegung auf den jeweiligen Betriebsmodus abhängig vom Zugriff auf Messergebnisse der Ströme in den Phasen des Elektromotors ist, wobei zumindest unterschieden wird zwischen einer oder mehreren der Klassen: Strommessung funktionsfähig, Strommessung in einer Phase ausgefallen und Strommessung vollständig ausgefallen, wobei bei eingeschränktem Zugriff auf Messergebnisse eines Stroms in einer Phase des Elektromotors, eine Rekonstruktion dieses Wertes unter Verwendung der gemessenen Stromwerte der anderen Phasen erfolgt.

2. Verfahren nach Anspruch 1, **dadurch gekennzeichnet, dass** die Rückfallebenen, d.h. die Betriebsmodi der Motorregelung, entsprechend definierten Leistungs-Degradationsstufen des elektromechanischen Aktuators, hierarchisch geordnet sind.

3. Verfahren nach einem der Ansprüche 1 oder 2, **dadurch gekennzeichnet, dass** ein Abschalten von Bordnetz-Schutzmaßnahmen und/oder einer Temperaturüberwachung und/oder einer Totzeitkompensation in Abhängigkeit des jeweiligen Betriebsmodus durchgeführt werden kann.

4. Verfahren nach mindestens einem der Ansprüche 1 bis 3, **dadurch gekennzeichnet, dass** die Festlegung auf den jeweiligen Betriebsmodus abhängig vom eingeschränkten oder uneingeschränkten Zugriff auf Temperaturen und/oder Zwischenkreisspannung und/oder Schaltzeiten der Pulsweitenmodulation des Elektromotors und dessen Ansteuerelektronik ist.

5. Verfahren nach Anspruch 1, **dadurch gekennzeichnet, dass** eine Reduzierung eines Aussteuergrades der Pulsweitenmodulation zur Ansteuerung des Elektromotors vorgenommen wird, wenn die Strommessung an jeweils einem Transistor der Phase der Ansteuerelektronik erfolgt.

6. Verfahren nach mindestens einem der Ansprüche 1, 4 oder 5, **dadurch gekennzeichnet, dass** bei vollständiger Einschränkung des Zugriffs auf die Messergebnisse aller Ströme in den Phasen des Elektromotors eine modellbasierte Bestimmung von Iststromwerten (Id_ist, Iq_ist) erfolgt.

7. Verfahren nach mindestens einem der Ansprüche 1, 5 oder 6, **dadurch gekennzeichnet, dass** bei eingeschränktem Zugriff auf die Strommessung an einem Transistor der Phase der Ansteuerelektronik die Bestimmung der Iststromwerte (Id_ist, Iq_ist) modellbasiert durchgeführt wird, insbesondere wenn eine Reduzierung des Aussteuergrades der Pulsweitenmodulation des Elektromotors nicht ausgeführt werden kann.

8. Verfahren nach mindestens einem der Ansprüche 2 bis 7, **dadurch gekennzeichnet, dass** in den Betriebsarten einer nicht mechanischen Rückfallebene des Aktuators, in denen, neben dem Zugriff auf die Messergebnisse der Ströme in den Phasen des Elektromotors, der Zugriff auf mindestens eine weitere Zustandsgröße eingeschränkt ist, die Motorregelung von einem stromgeregelten Betriebsmodus in einen spannungskommutierten Betriebsmodus umgeschaltet wird.

9. Verfahren nach mindestens einem der Ansprüche 1 bis 8, **dadurch gekennzeichnet, dass** für eine überwiegende Anzahl der Betriebsmodi weitgehend uneingeschränkter Zugriff auf die Zustandsgrößen, Drehzahl und Motorlage, des Elektromotors vorliegen.

10. Elektronische Einrichtung zum Betreiben eines Elektromotors (7) umfassend eine Sollwertschnittstelle (1) zur Vorgabe von Sollgrößen und Parametern, ein Modul zur Berechnung von Pulsweitenmodulations-Schaltzeiten (4), ein Modul zur Totzeitkompensation (5), ein Modul Leistungselektronik (6) zur Ansteuerung des dreiphasig angesteuerten Elektromotors (7), ein Modul zur Messung der Pulsweitenmodulations-Schaltzeiten (8), ein Modul zur Stromerfassung (9), ein Modul zur Spannungsmessung (10), ein Modul zur Temperaturerfassung (11), ein Modul zur Temperaturüberwachung (13), einen feldorientierten Stromregler (3), sowie elektrische Verbindungsleitungen zwischen den Bestandteilen, **dadurch gekennzeichnet, dass** ein Modul zur Sollstromermittlung (2) vorhanden ist, welches mit dem feldorientierten Stromregler (3) elektrisch verbunden ist und über diese Verbindung vom Modul zur Sollstromermittlung, unter Verwendung verschiedener Zustands- und/oder Schätzgrößen sowie gespeicherter Parameter, berechnete Sollstromwerte (Id_soll, Iq_soll) erhält, wobei die elektronische Einrichtung zur Ausführung eines Verfahrens gemäß einem der Ansprüche 1 bis 9 ausgestaltet ist.

11. Elektronische Einrichtung nach Anspruch 10, **dadurch gekennzeichnet, dass** diese einen Algorithmus umfasst, der derart ausgelegt ist, dass die elektronische Einrichtung ein Verfahren nach mindestens einem der Ansprüche 1 bis 9 abarbeiten kann.

12. Elektronische Einrichtung nach einem der Ansprüche 10 oder 11, **dadurch gekennzeichnet, dass** der dreiphasig angesteuerte Elektromotor ein permanentmagnetisch erregter Synchronmotor ist.

13. Elektronische Einrichtung nach mindestens einem der Ansprüche 10 bis 12, **dadurch gekennzeichnet, dass** ein Modul Bordnetz-Maßnahmen (12) vorhanden ist, welches mit dem Modul zur Sollstromermittlung (2) elektrisch verbunden ist und über diese Verbindung die Maximalwerte zur Begrenzung des aufgenommenen und/oder abgegebenen Bordnetzstromes übertragen werden.

14. Elektronische Einrichtung nach mindestens einem der Ansprüche 10 bis 13, **dadurch gekennzeichnet, dass** das Modul Temperaturüberwachung (13) mit dem Modul zur Sollstromermittlung (2) verbunden ist und über diese Verbindung die Maximalwerte zur Begrenzung des motorseitigen Stromes übertragen werden.

15. Elektronische Einrichtung nach mindestens einem der Ansprüche 13 bis 14, **dadurch gekennzeichnet, dass** das Modul zur Spannungsmessung mit dem Modul Bordnetz-Maßnahmen (12) verbunden ist und über diese Verbindung gemessene Spannungswerte, insbesondere der Zwischenkreisspannung, übertragen werden.

16. Elektronische Einrichtung nach mindestens einem Ansprüche 10 bis 15, **dadurch gekennzeichnet, dass** die Sollwert-Schnittstelle (1) mit dem Modul zur Sollstromermittlung (2) elektrisch verbunden ist und über diese Verbindung Sollgrößen und/oder Parameter übertragen werden.

17. Elektronische Einrichtung nach mindestens einem der Ansprüche 10 bis 16, **dadurch gekennzeichnet, dass** das Modul zur Temperaturüberwachung (13) mit dem Modul zur Temperaturerfassung (11) verbunden ist und über diese Verbindung Temperaturwerte übertragen werden, deren Bildung sich auf Messwerte, Modellberechnungen und/oder einer Mischung dieser stützt.

## Claims

1. Method for improving the availability of an electromechanical actuator of an electromechanical or electrohydraulic brake system in a motor vehicle, said method comprising electronic motor regulation functioning in a normal operation, i.e. non-restricted operating mode for a field-commutated electric motor actuated by pulse width modulation, wherein in addition to the non-restricted operating mode, further operating modes are defined for the motor regulation, which operating modes function with restricted access to state variables of the electric motor and the actuation electronics thereof, wherein a change in the regulation sequence and/or switching-off of individual functions of the motor regulation depending on the restricted access or the restricted accesses is/are implemented in said further operating modes,
**characterized in that** the fixing of the respective operating mode is dependent on the access to measurement results of the currents in the phases of the electric motor, wherein a distinction is at least drawn between one or more of the classes: current measurement functional, current measurement failed in one phase and current measurement completely failed,
wherein, in the case of restricted access to measurement results of a current in a phase of the electric motor, a reconstruction of this value is performed using the measured current values of the other phases.

2. Method according to Claim 1, **characterized in that** the release levels, i.e. the operating modes of the motor regulation are ordered hierarchically corresponding to defined power degradation stages of the electromechanical actuator.

3. Method according to either of Claims 1 and 2, **characterized in that** switching-off of vehicle electrical distribution system protection measures and/or temperature monitoring and/or dead time compensation can be implemented depending on the respective operating mode.

4. Method according to at least one of Claims 1 to 3, **characterized in that** the fixing of the respective operating mode is dependent on the restricted or unrestricted access to temperatures and/or intermediate circuit voltage and/or switching times of the pulse width modulation of the electric motor and the actuation electronics thereof.

5. Method according to Claim 1, **characterized in that** a reduction in a modulation degree of the pulse width modulation for the actuation of the electric motor is performed when the current measurement takes place at in each case one transistor of the phase of the actuation electronics.

6. Method according to at least one of Claims 1, 4 or 5, **characterized in that**, in the case of complete restriction of the access to the measurement results of all of the currents in the phases of the electric motor, a model-based determination of actual current values (Id_act, Iq_act) takes place.

7. Method according to at least one of Claims 1, 5 or 6, **characterized in that**, in the case of restricted access to the current measurement at a transistor of the phase of the actuation electronics, the determination of the actual current values (Id_act, Iq_act) is performed in model-based fashion, in particular when a reduction in the modulation degree of the pulse width modulation of the electric motor cannot be performed.

8. Method according to at least one of Claims 2 to 7, **characterized in that**, in those types of operation of a non-mechanical release level of the actuator in which, in addition to the access to the measurement results of the currents in the phases of the electric motor, the access to at least one further state variable is restricted, the motor regulation is switched over from a current-regulated operating mode to a voltage-commutated operating mode.

9. Method according to at least one of Claims 1 to 8, **characterized in that**, for a large number of the operating modes, there is largely unrestricted access to the state variables, rotation speed and motor position of the electric motor.

10. Electronic device for operating an electric motor (7), comprising a setpoint value interface (1) for presetting setpoint variables and parameters, a module for calculating pulse width modulation switching times (4), a module for dead time compensation (5), a power electronics module (6) for actuating the electric motor (7) actuated on three phases, a module for measuring the pulse width modulation switching times (8), a module for current detection (9), a module for voltage measurement (10), a module for temperature detection (11), a module for temperature monitoring (13), a field-oriented current controller (3), and electrical connecting lines between the component parts, **characterized in that** a module for setpoint current determination (2) is provided which is electrically connected to the field-oriented current controller (3) and receives, via this connection, setpoint current values (Id_set, Iq_set) calculated using various state and/or estimated variables and stored parameters from the module for setpoint current determination, wherein the electronic device is designed to carry out a method according to one of Claims 1 to 9.

11. Electronic device according to Claim 10, **characterized in that** said electronic device comprises an algorithm, which is configured such that the electronic device can execute a method according to at least one of Claims 1 to 9.

12. Electronic device according to either of Claims 10 and 11, **characterized in that** the electric motor actuated on three phases is a permanent magnet synchronous motor.

13. Electronic device according to at least one of Claims 10 to 12, **characterized in that** a vehicle electrical distribution system measures module (12) is provided which is electrically connected to the module for setpoint current determination (2), and the maximum values for limiting the drawn and/or output vehicle electrical distribution system current are transmitted via this connection.

14. Electronic device according to at least one of Claims 10 to 13, **characterized in that** the temperature monitoring module (13) is connected to the module for setpoint current determination (2), and the maximum values for limiting the motor-side current are transmitted via this connection.

15. Electronic device according to at least one of Claims 13 to 14, **characterized in that** the module for voltage measurement is connected to the vehicle electrical distribution system measures module (12), and measured voltage values, in particular of the intermediate circuit voltage, are transmitted via this connection.

16. Electronic device according to at least one of Claims 10 to 15, **characterized in that** the setpoint value interface (1) is electrically connected to the module for setpoint current determination (2), and setpoint variables and/or parameters are transmitted via this connection.

17. Electronic device according to at least one of Claims 10 to 16, **characterized in that** the module for temperature monitoring (13) is connected to the module for temperature detection (11), and temperature values formed on the basis of measured values, model calculations and/or a mixture of these are transmitted via this connection.

## Revendications

1. Procédé, destiné à améliorer la disponibilité d'un actionneur électromécanique d'un système de freinage électromécanique ou électrohydraulique dans un véhicule automobile, comprenant une régulation électronique du moteur fonctionnant dans un mode normal, c'est-à-dire dans un mode de fonctionnement non restreint pour un moteur électrique à champ commuté, activé par modulation de largeurs d'impulsion, en supplément du mode de fonctionnement non restreint, des modes de fonctionnement additionnels étant définis pour la régulation du moteur, lesquels fonctionnent avec un accès restreint à des grandeurs d'état du moteur électrique et à son électronique d'activation, dans ces derniers, un changement du cycle de régulation et/ou une mise à l'arrêt de fonctions isolées de la régulation du moteur étant réalisés en fonction de l'accès restreint ou des accès restreints, **caractérisé en ce que** la détermination du mode de fonctionnement respectif dépend de l'accès à des résultats de mesure des courants dans les phases du moteur électrique, étant différencié au moins entre l'une ou plusieurs des classes : mesure du courant opérationnelle, mesure du courant défaillante dans une phase et mesure du courant totalement défaillante, en cas d'accès restreint à des résultats de mesure d'un courant dans une phase du moteur électrique, une reconstruction de ladite valeur s'effectuant par utilisation des valeurs de courant mesurées pour les autres phases.

2. Procédé selon la revendication 1, **caractérisé en ce que** les niveaux de substitution, c'est-à-dire les modes de fonctionnement de la régulation du moteur sont classées hiérarchiquement, en fonction de niveaux de dégradation de puissance définis de l'actionneur électromécanique.

3. Procédé selon l'une quelconque des revendications 1 ou 2, **caractérisé en ce qu'**une mise à l'arrêt d'actions de protection du réseau de bord et/ou d'une supervision de la température et/ou d'une compensation des temps morts peut être réalisée en fonction du mode de fonctionnement respectif.

4. Procédé selon au moins l'une quelconque des revendications 1 à 3, **caractérisé en ce que** la détermination du recours au mode de fonctionnement respectif dépend d'un accès restreint ou non restreint à des températures et/ou à une tension de circuit intermédiaire et/ou à des temps de commutation de la modulation de largeurs d'impulsion du moteur électrique et de son électronique d'activation.

5. Procédé selon la revendication 1, **caractérisé en ce qu'**il est procédé à une réduction d'un taux d'activation de la modulation de largeurs d'impulsion pour activer le moteur électrique si la mesure du courant s'effectue sur respectivement un transistor de la phase de l'électronique d'activation.

6. Procédé selon au moins l'une quelconque des revendications 1, 4 ou 5, **caractérisé en ce que** dans le cas d'une restriction totale de l'accès aux résultats de mesure de tous les courants dans les phases du moteur électrique, il s'effectue une détermination basée sur des modèles de valeurs de courant réelles (Id_ist, Iq_ist).

7. Procédé selon au moins l'une quelconque des revendications 1, 5 ou 6, **caractérisé en ce que** dans le cas d'un accès restreint à la mesure du courant sur un transistor de la phase de l'électronique d'activation, la détermination des valeurs de courant réelles (Id ist, Iq_ist) est réalisée sur la base de modèles, notamment s'il ne peut pas être procédé à une réduction du taux d'activation de la modulation de largeurs d'impulsion du moteur électrique.

8. Procédé selon au moins l'une quelconque des revendications 2 à 7, **caractérisé en ce que** dans les modes de fonctionnement d'un niveau de substitution non mécanique de l'actionneur dans lesquels, non seulement l'accès aux résultats de mesure des courants dans les phases du moteur électrique, mais également l'accès à une autre grandeur d'état est restreint, la régulation du moteur est commutée d'un mode de fonctionnement à courant régulé dans un mode de fonctionnement à tension commutée.

9. Procédé selon au moins l'une quelconque des revendications 1 à 8, **caractérisé en ce que** pour un très grand nombre de modes de fonctionnement, on est en présence d'un accès largement non restreint aux grandeurs d'état, régime et position du moteur du moteur électrique.

10. Système électronique, destiné à faire fonctionner un moteur électrique (7) comprenant une interface de valeurs de consigne (1), destinée à prédéfinir des grandeurs de consigne et des paramètres, un module de calcul de temps de commutation de la modulation de largeurs d'impulsions (4), un module de compensation des temps morts (5), un module d'électronique de puissance (6), destiné à activer le moteur électrique (7) à activation triphasée, un module destiné à mesurer le temps de commutation de la modulation de largeurs d'impulsions (8), un module de détection de courant (9), un module de mesure de la tension (10), un module de détection de la température (11), un module de supervision de la température (13), un régulateur de courant (3) à champ orienté, ainsi que les lignes de connexion électrique entre les composants, **caractérisé en ce qu'**un module de détermination du courant de consigne (2) est présent, lequel est électriquement connecté avec le régulateur de courant (3) à champ orienté et lequel via cette connexion du module de détermination du courant de consigne, en utilisant différentes grandeurs d'état et/ou estimatives, ainsi que des paramètres mémorisés, obtient des valeurs de courant de consigne (Id_soll, Iq_soll) calculées, le système électronique étant conçu pour réaliser un procédé selon l'une quelconque des revendications 1 à 9.

11. Système électronique selon la revendication 10, **caractérisé en ce qu'**il comprend un algorithme qui est conçu de telle sorte que le système électronique puisse exécuter un procédé selon au moins l'une quelconque des revendications 1 à 9.

12. Système électronique selon l'une quelconque des revendications 10 ou 11, **caractérisé en ce que** le moteur électrique à activation triphasée est un moteur synchrone excité par aimant permanent.

13. Système électronique selon au moins l'une quelconque des revendications 10 à 12, **caractérisé en ce qu'**un module d'actions pour le réseau de bord (12) est présent, lequel est électriquement connecté avec le module de détermination du courant de consigne (2) et **en ce que** via cette connexion sont transmises les valeurs maximales pour la limitation du courant de réseau de bord absorbé et/ou restitué.

14. Système électronique selon au moins l'une quelconque des revendications 10 à 13, **caractérisé en ce que** le module de supervision de la température (13) est connecté avec le module de détermination du courant de consigne (2) et **en ce que** via cette connexion sont transmises les valeurs maximales pour la limitation du courant du côté du moteur.

15. Système électronique selon au moins l'une quelconque des revendications 13 à 14, **caractérisé en ce que** le module de mesure de la tension est connecté avec le module d'actions pour le réseau de bord (12) et **en ce que** via cette connexion sont transférées des valeurs de tension mesurées, notamment de la tension de circuit intermédiaire.

16. Système électronique selon au moins l'une quelconque des revendications 10 à 15, **caractérisé en ce que** l'interface de valeurs de consigne (1) est électriquement connecté avec le module de détermination du courant de consigne (2) et **en ce que** via cette connexion sont transmis des grandeurs de consigne et/ou des paramètres.

17. Système électronique selon au moins l'une quelconque des revendications 10 à 16, **caractérisé en ce que** le module de supervision de la température (13) est connecté avec le module de détection de la température (11) et **en ce que** via cette connexion sont transmises des valeurs de température dont la formation s'appuie sur des valeurs de mesure, des calculs de modèles et/ou un mélange de ces derniers.
